# EUROPÄISCHE PATENTANMELDUNG

(11) **EP 4 456 415 A1**
(43) Veröffentlichungstag der Anmeldung: **30.10.2024**
(21) Anmeldenummer: 23170682.1
(22) Anmeldetag: 28.04.2023
(51) Int. Cl.: H02S 20/24, F24S 20/67

(54) **MONTAGESYSTEM FÜR PHOTOVOLTAIKANLAGEN**

(71) Anmelder: Rose, Hans-Jürgen, 30823 Garbsen (DE); Finke, Patrick, 38239 Salzgitter (DE)
(72) Erfinder: Rose, Hans-Jürgen, 30823 Garbsen (DE); Finke, Patrick, 38239 Salzgitter (DE)
(74) Vertreter: Gramm, Lins & Partner Patent- und Rechtsanwälte PartGmbB

(57) **Zusammenfassung**

Die Erfindung betrifft ein Montagesystem für Photovoltaikanlagen zur Montage auf eine Dachfläche mit einer ebenen Oberfläche, wobei das Montagesystem zumindest ein Trägerelement hat, wobei das Trägerelement eine Unterseite und eine Oberseite hat, wobei die Unterseite an der Dachfläche verklebbar ist und wobei an der Oberfläche unmittelbar oder mittelbar ein Photovoltaikmodul befestigbar ist. Das Trägerelement umfasst zumindest zu einem überwiegenden Teil ein Schaumstoff.

## Beschreibung

Die Erfindung betrifft ein Montagesystem für Photovoltaikanlagen zur Montage auf eine Dachfläche mit einer ebenen Oberfläche, wobei das Montagesystem zumindest ein Trägerelement hat, wobei das Trägerelement eine Unterseite und eine Oberseite hat, wobei die Unterseite an der Dachfläche verklebbar ist und wobei an der Oberfläche unmittelbar oder mittelbar ein Photovoltaikmodul befestigbar ist.

Herkömmliche Montagesysteme können den Nachteil haben, dass diese zu schwer sind, um diese auf ein Dach zu montieren, dessen Traglast gering ist. Diese Montagesysteme sind oft aus einem Metall hergestellt und können zum Beispiel bei bestimmten Flachdächern aufgrund des hohen Eigengewichtes nicht verwendet werden. Insbesondere bei bestehenden Nichtwohneinheiten wurde bei der Auslegung der Statik des Daches eine Photovoltaik- oder Solarthermieanlage selten oder gar nicht in Betracht gezogen.

Darüber hinaus ist die Montage auch aufwendig, da herkömmliche Montagesysteme grundsätzlich mit einem aufwendigen Schienensystem auf ein Dach geschraubt werden müssen. Hierbei kann es zur Durchdringung der Dachhaut kommen, die zu Wassereintritt unter die Dachhaut führen kann.

Derartige ballastierte Systeme sind grundsätzlich zu schwer für die Traglast des Daches und erfüllen damit nicht die statischen Anforderungen. Des Weiteren kommt es aufgrund der Druck-Sog -Wirkung des Windes zu einem Versetzen, bzw. Verrutschen, dieser Anlagen, wobei Schäden an den Abdichtungsbahnen entstehen können und es zu Wassereintritt unter die Dachhaut kommen kann.

Ausgehend hiervon ist es Aufgabe der vorliegenden Erfindung ein verbessertes Montagesystem für Photovoltaikanlagen zu schaffen.

Die Aufgabe wird mit einem Montagesystem mit den Merkmalen des Anspruchs 1 gelöst. Vorteilhafte Ausführungsformen sind in den Unteransprüchen beschrieben. Bei dem gattungsgemäßen Montagesystem wird vorgeschlagen, dass das Trägerelement zumindest zu einem überwiegenden Teil ein Schaumstoff umfasst.

Ein überwiegender Teil bedeutet insbesondere, dass mindestens 50 Prozent des Trägerelementes einen Schaumstoff umfassen. Dieser Schaumstoff kann insbesondere ein Polystyrol sein. Ferner vorteilhaft kann das Trägerelement mindestens zu einem 75 Prozentanteil einen Schaumstoff, insbesondere ein Polystyrol, umfassen. Weiterhin kann das Trägerelement nahezu vollständig einen Schaumstoff, insbesondere ein Polystyrol umfassen. Nahezu bedeutet insbesondere, dass noch geringe Mengen anderer Werkstoffe wie zum Beispiel Additive vorhanden sein können.

Schaumstoffe im Sinne der vorliegenden Erfindung können Stoffe mit zellförmiger oder zelliger Struktur sein. Die Schaumstoffe umfassen dabei überwiegend künstlich hergestellte Stoffe. Schaumstoff hat eine niedrige Dichte und ist damit vergleichsweise leicht. Für die Herstellung (Schäumung) von Schaumstoff sind grundsätzlich alle Kunststoffe geeignet.

Als Schaumstoff können zum Beispiel folgende Materialien zur Anwendung kommen:
Polyurethan (PU), High Density Polyethylen (HD-PE), Polycarbonat (PC),
Polyetherimid (PEI), Polyphenylensulfid (PPS), PVC, PE, Acryl und PC.

Das Montagesystem eignet sich für ebene Untergründe. Eben kann insbesondere als glatt verstanden werden, das heißt zum Beispiel ohne größere makroskopische Erhebungen in dem Untergrund. Diese Untergründe können zum Beispiel aus Bitumenbahnen, Folien, Kunststoff-, Metall- und Betonoberflächen bestehen. Ein Untergrund aus Dachziegeln hingegen zählt erfindungsgemäß nicht zu einem ebenen Untergrund. Insbesondere bei Flachdächern, die nur eine geringe Traglast haben, kann durch das erfindungsgemäße Montagesystem zur Anwendung kommen, da das Montagesystem nur ein geringes Eigengewicht im Vergleich zu herkömmlichen Montagesystemen hat.

Eine unmittelbare Befestigung bedeutet insbesondere, dass das Photovoltaikmodul direkt an dem Trägerelement befestigt wird oder werden kann. Eine mittelbare Befestigung bedeutet insbesondere, dass das Photovoltaikmodul über bestimmte Halteelemente oder Montageschienen auf dem Trägerelement befestigt wird oder werden kann.

Das Montagesystem hat den Vorteil, dass dies kostengünstig hergestellt werden kann. Weiterhin hat es den Vorteil, dass es den statischen Anforderungen zur Montage von Photovoltaikmodulen entspricht und auch der Witterung standhält.

Darüber hinaus ist das erfindungsgemäße Montagesystem auch einfach zu installieren, sodass die Installationskosten eines derartigen Systems im Vergleich zu herkömmlichen Montagesystemen reduziert ausfallen können.

Der Schaumstoff kann ein expandiertes Polystyrol sein. Ferner vorteilhaft kann der Schaumstoff ein expandiertes Polystyrolhartschaumstoff sein, wobei dem Schaumstoff ein Additiv zur Verbesserung der Festigkeit zugesetzt ist. Alternativ oder zusätzlich kann ein Additiv zur Verbesserung des Flammenschutzes hinzugefügt werden. Flammenschutz verhindert die Ausbreitung von Bränden oder schränkt diesen zumindest ein. Die Ausbreitung kann aber auch verlangsamt oder verhindert werden. Dafür kann zum Beispiel das Material EPS-F verwendet werden. EPS-F ist ein expandierter Polystyrol-Hartschaum (EPS) mit einem Additiv zur Verbesserung des Flammenschutzes. Als Additiv zur Verbesserung des Flammenschutzes kann zum Beispiel Hexabromcyclododecan (HBCD) verwendet werden

Das expandierte Polystyrol ist grundsätzlich auch unter dem Handelsnamen Styropor bekannt. Das expandierte Polystyrol hat den Vorteil, dass es besonders leicht ist und damit eine Anwendung des Montagesystems auf Dächern mit geringer Traglast weiter verbessert. Durch ein entsprechendes Additiv kann das Trägerelement weiter gegen äußere Einflüsse, wie zum Beispiel unterschiedliche Witterungsverhältnisse, abgeschirmt werden. Zudem kann eine direkte Montage des Photovoltaikmodules mit dem Trägerelement weiter verbessert werden. Die direkte Montage des Photovoltaikmoduls kann zum Beispiel über eine Schraubverbindung erfolgen, in dem das Photovoltaikmodul direkt mit dem Trägerelement verschraubt wird.

Alternativ kann auch der Schaumstoff auch ein Polyurethan (PUR), insbesondere ein Polyisocyanurat (PIR) umfassen. Insbesondere ein hochverdichteter Funktionswerkstoff auf PUR und/oder PIR-Hartschaumbasis kann für das erfindungsgemäße Montagesystem verwendet werden. Ein derartiger Funktionswerkstoff ist zum Beispiel unter dem Handelsnamen Puren/Purenit bekannt. Purenit hat dabei ähnliche Vorteile im Vergleich zu dem expandierten Polystyrol, wobei dem Polystyrol ein Additiv zur Verbesserung der Festigkeit zugesetzt ist.

An der Oberfläche des Trägerelementes kann wenigstens ein Haltelement angeordnet sein, wobei das Halteelement mit dem Photovoltaikmodul verschraubbar ist.

Das Halteelement kann zur zusätzlichen mittelbaren Befestigung des Photovoltaikmoduls an dem Trägerelement dienen, dass die Stabilität des Montagesystems mit einer mittelbaren Befestigung des Photovoltaikmoduls weiter verbessert.

Das Halteelement kann dabei zum Beispiel eine Klemmverbindung haben, die das Photovoltaikmodul an dem Trägerelement fixiert.

Das Montagesystem kann eine Vielzahl von Trägerelementen haben, wobei das Photovoltaikmodul an wenigstens zwei der Trägerelemente befestigbar ist.

Auf diese Weise kann das Montagesystem sehr einfach gehalten werden, um das entsprechende Photovoltaikmodul an den Trägerelementen zu befestigten. Die einzelnen Trägerelementen können so individuell mit der Dachfläche verklebt werden, wobei gleichzeitig Material eingespart werden kann, da nur die notwendigen Bereiche des Daches zur Montage des Photovoltaikmoduls mit den Trägerelementen versehen werden kann. Dabei ist nicht zwingend auf eine parallele Montage zu achten, sondern es lässt größere Toleranzen bei der Montage zu, da das Material an den überwiegenden Flächen des Daches montierbar ist. Auch dadurch kann die Montage vereinfacht werden.

An der Oberfläche des Trägerelementes kann eine Trägerschiene angeordnet sein, wobei das Photovoltaikmodul an der Trägerschiene befestigbar ist.

Auf diese Weise können herkömmliche Trägerschienen verwendet werden, um das Photovoltaikmodul an dem Trägerelement zu befestigten.

Das Trägerelement kann stufenförmig ausgebildet sein, wobei die Oberfläche des Trägerelementes wenigstens zwei verschiedenartige Höhen in Bezug auf die Unterseite hat.

Auf diese Weise kann das Photovoltaikmodul mit einer gewissen Neigung an dem Trägerelement montiert werden. Durch die Neigung kann der Einfallswinkel von Sonnenstrahlen in Bezug auf das Photovoltaikmodul derart angepasst werden, dass der Wirkungsgrad des Photovoltaikmoduls verbessert werden kann.

Das einzelne Trägerelement kann mit einem gängigen Trennverfahren der Fertigungstechnik bearbeitet werden, zum Beispiel mit einer handelsüblichen Säge. Auf diese Weise kann das einzelne Trägerelement gekürzt und angepasst werden. Somit kann durch Montage, zum Beispiel durch Kleben, eines kürzen Stückes eines Trägerelementes auf ein längeres Stück eines Trägerelementes eine Stufe im Sinne der stufenförmigen Ausbildung erreicht werden.

Dabei kann eine Modularität geschaffen werden und es kommt zu keinem oder sehr wenig Verschnitt des verwendeten Materials. Die einzelnen Schnittstücke des Trägerelementes können zum Beispiel zur Herstellung des Neigungswinkels des Trägersystems verwendet werden. Dabei können die Schnittstücke ebenfalls durch einen Kleber miteinander verbunden werden.

Weiterhin betrifft die vorliegende Erfindung ein Photovoltaiksystem für ebene Dachflächen mit einem oben beschriebenen Montagesystem und wenigstens einem Photovoltaikmodul, wobei das Photovoltaikmodul an der Oberfläche des Trägerelementes befestigt ist.

Dies hat den Vorteil, dass der Aufbau des Photovoltaiksystems sehr einfach gehalten ist und wenige Komponenten verwendet werden. Das erhöht die Verfügbarkeit des Systems.

Das Photovoltaikmodul kann an der Oberfläche des Trägerelementes unmittelbar mit dem Trägerelement verschraubt sein.

Eine unmittelbare Verschraubung bedeutet insbesondere, dass das Photovoltaikmodul ohne zusätzliche Befestigungselemente mit dem Trägerelement verschraubt wird, indem zum Beispiel eine Schraube durch das Photovoltaikmodul direkt in das Trägerelement verschraubt wird.

Die unmittelbare Verschraubung reduziert auch die Anzahl der Komponenten des Photovoltaiksystems weiter. Somit kann ausschließlich das Trägerelement, das Photovoltaikmodul und die Komponenten zur Montage verwendet werden, um das Photovoltaiksystem an einer ebenen Fläche zu montieren.

Weiterhin betrifft die vorliegende Erfindung ein Verfahren zur Montage eines oben beschriebenen Photovoltaiksystems mit den folgenden Schritten:
- Kleben des Trägerelementes auf die ebene Oberfläche der Dachfläche
- Kleben oder Verschrauben des Photovoltaikmoduls an der Oberfläche des Trägerelementes

Durch ein Verkleben des Trägerelementes mit der Oberfläche der Dachfläche wird eine Durchdringung der Dachfläche vermieden. Somit werden auch Undichtigkeiten und damit verbundene Folgeschäden reduziert.

Das Kleben des Montagesystems kann auf die ebene Oberfläche der Dachfläche mit einem MS-Polymer Klebstoff oder einem Polyurethan-Klebstoff erfolgen.

Es hat sich gezeigt, dass insbesondere diese Klebstoffe eine stabile Verbindung zwischen Trägerelement und Dachfläche herstellen, sodass die Stabilität des Montagesystems, bzw. des Photovoltaiksystems, gegen äußere Einflüsse, wie zum Beispiel hohe Windgeschwindigkeiten, verbessert werden kann.

Als MS-Polymer Klebstoffe können zum Beispiel folgende Klebstoffe zur Anwendung kommen:
1-K-MS-Klebstoff, 1-K-Hybrid-Montage-Klebstoff, 2-K-MS-Klebstoff, 2-K-STP-Klebstoff.

Als PU-Klebstoffe können zum Beispiel folgende Klebstoffe in Frage kommen:
1-K-PU und 2-K-PUR-Reaktionsklebstoffe

Eine Vielzahl von Trägerelementen kann mit der ebene Oberfläche der Dachfläche verklebt werden und eine Vielzahl von Photovoltaikmodulen an den Trägerelementen befestigt werden, wobei jeweils ein Photovoltaikmodul an wenigstens zwei Trägerelementen befestigt wird.

Der unbestimmte Begriff "ein" ist als solcher und nicht als Zahlwort zu verstehen. So ist auch denkbar, dass zum Beispiel eine Vielzahl von Trägerelementen vorhanden ist, um ein oder mehrere Photovoltaikmodule an den Trägerelementen zu befestigen. Grundsätzlich werden bei Photovoltaiksystemen auch mehr als ein Modul verbaut. Die Anzahl ist zum Beispiel abhängig von der Dachfläche, die genutzt werden kann.

Die Erfindung wird nachfolgend anhand von Ausführungsbeispielen beispielhaft mit den beigefügten Zeichnungen näher erläutert. Es zeigen:
- Figur 1: - ein erfindungsgemäßen Montagesystem in einer ersten Ausführungsform;
- Figur 2: - ein erfindungsgemäßes Photovoltaiksystem in einer ersten Ausführungsform;
- Figur 3: - ein erfindungsgemäßes Photovoltaiksystem in einer zweiten Ausführungsform;
- Figur 4: - ein erfindungsgemäßes Photovoltaiksystem in einer dritten Ausführungsform;
- Figur 5: - ein erfindungsgemäßes Photovoltaiksystem in einer vierten Ausführungsform;
- Figur 6: - ein erfindungsgemäßes Photovoltaiksystem in einer fünften Ausführungsform;
- Figur 7a: - ein erfindungsgemäßes Photovoltaiksystem in einer sechsten Ausführungsform;
- Figur 7b: - ein erfindungsgemäßes Photovoltaiksystem nach Figur 7a mit Schienen zur Montage des Photovoltaikmoduls;
- Figur 8a: - ein erfindungsgemäßes Photovoltaiksystem in einer siebten Ausführungsform;
- Figur 8b: - ein erfindungsgemäßes Photovoltaiksystem nach Figur 8a mit Schienen zur Montage des Photovoltaikmoduls;
- Figur 9a: - ein erfindungsgemäßes Photovoltaiksystem in einer achten Ausführungsform;
- Figur 9b: - ein erfindungsgemäßes Photovoltaiksystem nach Figur 9a mit Schienen zur Montage des Photovoltaikmoduls.

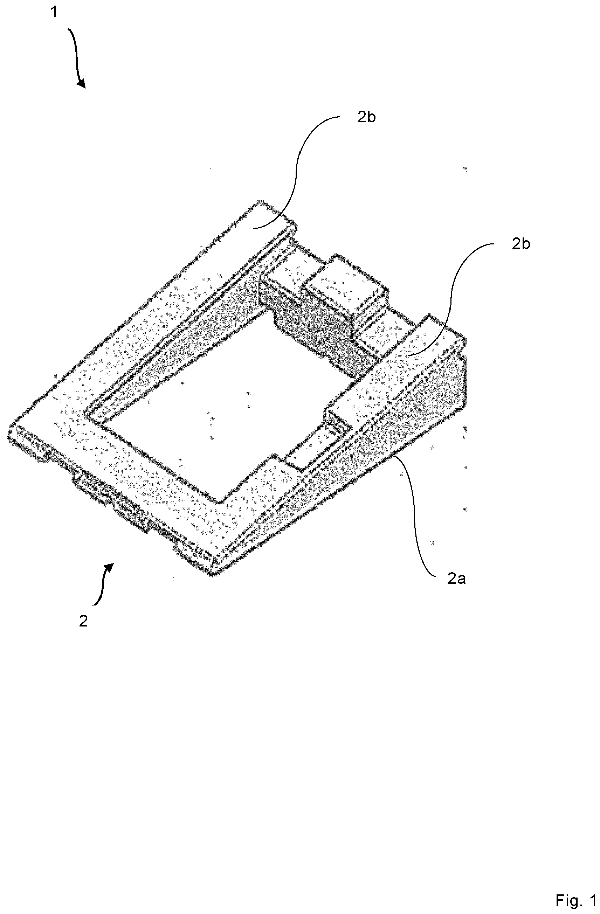

Figur 1 zeigt ein erfindungsgemäßes Montagesystem 1 für Photovoltaikanlagen in einer ersten Ausführungsform. Das Montagesystem 1 umfasst ein Trägerelement 2 mit einer Unterseite 2a und einer Oberseite 2b. Deutlich wird, dass die Oberseite 2b schräg ausgebildet ist. Das bedeutet, dass die Ebene, die durch die Oberseite 2b und die Ebene, die durch die Unterseite 2a gebildet wird, einen Winkel ausbilden.

Die Unterseite 2a ist derart ausgebildet, dass diese auf einer ebenen Dachfläche verklebt werden kann, wobei die Oberseite 2b derart ausgebildet ist, dass ein oder mehrere Photovoltaikmodule unmittelbar oder mittelbar auf der Oberseite 2b an dem Trägerelement montiert werden können. Die Befestigung des Photovoltaikmoduls kann zum Beispiel unmittelbar durch eine Schraubverbindung mit dem Trägerelement 2 erfolgen oder mittelbar durch ein zusätzliches Haltelement. Es ist aber auch denkbar, dass das Photovoltaikmodul unmittelbar auf die Oberseite 2b des Trägerelementes 2 geklebt wird.

Das Trägerelement 2 ist dabei überwiegend aus einem Schaumstoff gebildet. Insbesondere kann der Schaumstoff ein expandierter Polystyrolhartschaumstoff sein, wobei dem Schaumstoff ein Additiv zur Verbesserung der Festigkeit zugesetzt sein kann und das Trägerelement ist zumindest annähernd vollständig aus diesem expandierten Polystyrolhartschaumstoff gebildet. Das Additiv kann zum Beispiel zur Verbesserung des Flammenschutzes hinzugefügt werden. Flammenschutz verhindert die Ausbreitung von Bränden oder schränkt diesen zumindest ein. Die Ausbreitung kann aber auch verlangsamt oder verhindert werden. Dafür kann zum Beispiel das Material EPS-F verwendet werden. EPS-F ist ein expandierter Polystyrol-Hartschaum (EPS) mit einem Additiv zur Verbesserung des Flammenschutzes. Als Additiv zur Verbesserung des Flammenschutzes kann zum Beispiel Hexabromcyclododecan (HBCD) verwendet werden. Durch die Verwendung eines Schaumstoffes als Trägerelement 2 kann das Trägerelement 2 auf einfache Weise mit einer ebenen Dachfläche verklebt werden und zugleich eine notwendige Stabilität des Montagesystems gewährleistet werden.

Durch eine derartige Verklebung des Montagesystems 1 für Photovoltaikanlagen kann die Montage auch deutlich vereinfacht werden, da zum Beispiel keine zusätzlichen Verschraubungsarbeiten oder die Anbringung zusätzlicher Komponenten wie Halteschienen durchgeführt werden müssen, um das Montagesystem 1 an der Dachfläche zu befestigen.

Es ist auch denkbar, dass zwei derartige Trägerelemente 2 das Montagesystem 1 bilden und spiegelverkehrt zueinander angeordnet sind und mit einer Dachfläche verklebt werden, sodass zwei Photovoltaikmodule mit verschiedenen Ausrichtungen zur Sonne an die Trägerelemente 2 verschraubt werden können, um eine Effizient des Photovoltaiksystems zu verbessern.

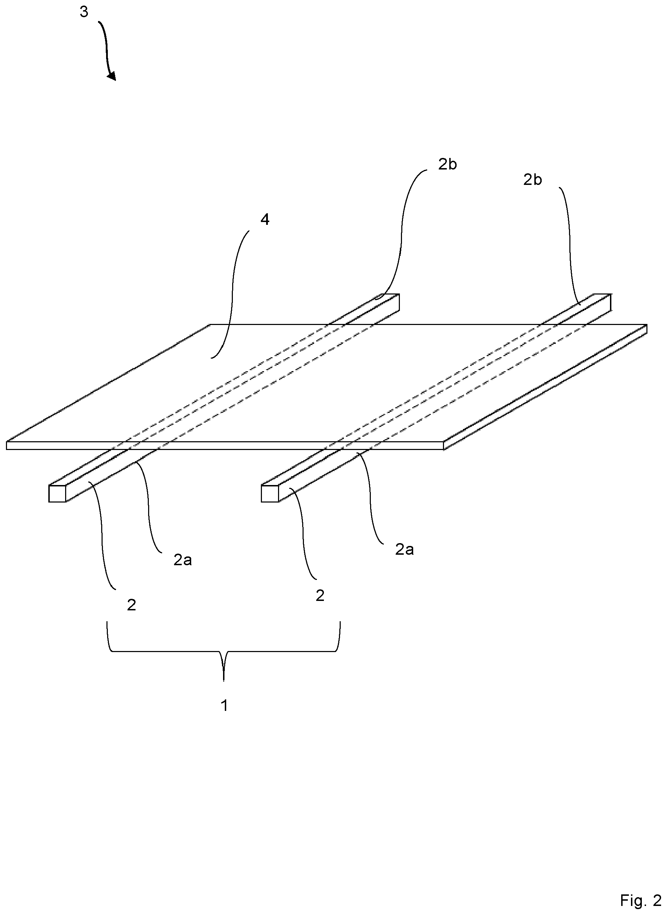

Figur 2 zeigt ein erfindungsgemäßes Photovoltaiksystem 3 mit zwei Trägerelementen 2, die das Montagesystem 1 bilden. Deutlich wird, dass die Trägerelemente 2 längliche Bauelemente sind, die deutlich Länger als breiter und höher ausgebildet sind. Die Trägerelemente 2 sind somit als eine Art längliche Stangenprofile aus Schaumstoff ausgebildet. In der vorliegenden Ausführungsform haben die Trägerelemente einen viereckigen Querschnitt. Es sind aber auch andere Querschnitte, zum Beispiel ein dreieckiger Querschnitt, denkbar. In der vorliegenden Ausführungsform sind die Trägerelemente aus einem expandierten Polystyrolhartschaumstoff gebildet, wobei dem Schaumstoff ein
zur Verbesserung der Festigkeit zugesetzt sein kann. Auf diese Weise können die Trägerelemente 2 auf einfache Weise mit einer ebenen Dachfläche verklebt werden.

Deutlich wird, dass ein Photovoltaikmodul 4 an der Oberseite 2b beider Trägerelemente 2 befestigt ist. Diese Befestigung kann zum Beispiel unmittelbar über eine Schraubverbindung oder eine Klebeverbindung erfolgen. Es sind aber auch mittelbare Befestigungsarten, zum Beispiel über ein zusätzliches Schienensystem, denkbar.

In dem Ausführungsbeispiel der Figur 2 wird deutlich, dass die Trägerelemente 2 die gleiche Höhe aufweisen, sodass das Photovoltaikmodul 4 keine Neigung in Bezug auf die Unterseite 2a der Trägerelemente 2 aufweist. Es ist aber auch denkbar, dass eines der Trägerelemente 2 höher ausgebildet ist als das andere Trägerelement 2. Das bedeutet, dass die Höhe, also der Abstand der Oberseite 2b zur Unterseite 2a, des einen Trägerelementes 2 größer ist als die Höhe des anderen Trägerelementes 2. Dadurch kann eine Neigung des Photovoltaikmoduls 4 in Bezug auf die Unterseite 2a erreicht werden, die einen Winkel zwischen der Ebene des Photovoltaikmoduls 4 und der Ebene, die durch die Unterseiten 2a der Trägerelemente 2 gebildet wird, ausbilden. Auf diese Weise kann der Sonneneinfallswinkel auf das Photovoltaikmodul 4 entsprechend optimiert werden, um den Wirkungsgrad des Photovoltaikmoduls 4 zu steigern.

Das ganze Photovoltaiksystem 3 ist entsprechend skalierbar. Das heißt, es ist denkbar, dass mehrere Trägerelemente 2 nebeneinander angeordnet sind, sodass eine Vielzahl von Photovoltaikmodulen 4 nebeneinander und/oder übereinander an den Trägerelementen 2 montiert werden können.

Bei dem Ausführungsbeispiel nach Figur 2 kann es von Vorteil sein, wenn die Trägerelemente 2 in einer Linie von einem tiefergelegenen Punkt der Dachoberfläche zu einem höheren Punkt der Dachoberfläche angeordnet sind, damit ein Wasserabtransport weiter verbessert wird.

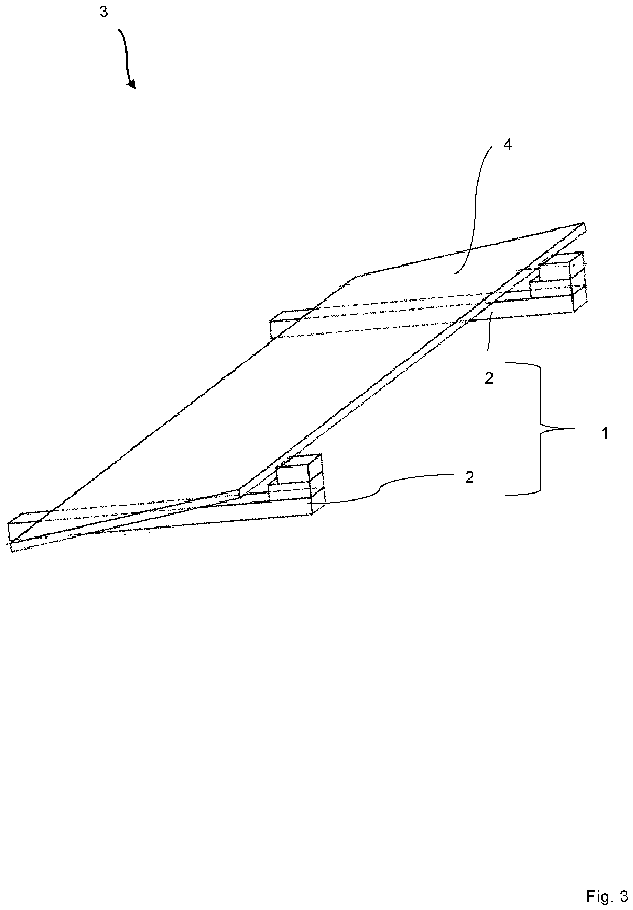

Figur 3 zeigt ein Photovoltaiksystem 3 in einer zweiten Ausführungsform. Im Unterschied zur Ausführungsform nach Figur 2 sind die Trägerelemente 2 des Montagesystems 1 stufenförmig, bzw. mehrstufig, ausgebildet.

Das Trägerelement 2 kann dabei zum Beispiel aus einer Vielzahl von mehreren übereinandergestapelten Stangenprofilen aus Schaumstoff sein, die in Ihrer Länge variieren können. Dabei ist zum Beispiel denkbar, dass die einzelnen Profile miteinander verklebt werden.

Das einzelne Trägerelement 2 kann dabei mit einem gängigen Trennverfahren der Fertigungstechnik bearbeitet werden, zum Beispiel mit einer handelsüblichen Säge. Auf diese Weise kann das einzelne Trägerelement 2 gekürzt und angepasst werden. Somit kann durch Montage, zum Beispiel durch Kleben, eines kürzen Stückes eines Trägerelementes 2 auf ein längeres Stück eines Trägerelementes 2 die Stufe im Sinne der stufenförmigen Ausbildung erreicht werden. Dabei kann eine Modularität geschaffen werden und es kommt zu keinem oder sehr wenig Verschnitt des verwendeten Materials.

In dem vorliegenden Ausführungsbeispiel nach Figur 3 werden zum Beispiel zwei kürzere Stücke von Trägerelementen 2 auf ein längeres Trägerelement 2 geklebt, um die stufenförmige Ausbildung zu erreichen.

Es ist aber auch möglich, dass die Profile aus einem Stück gefertigt werden und einstückig ausgebildet sind. Im Ausführungsbeispiel nach Figur 3 wird deutlich, dass bei jedem Trägerelement 2 drei übereinander angeordnete Stangenprofile hat.

Auf diese Weise kann das Photovoltaikmodul 4 schräg in Bezug auf die Unterseite 2a der Trägerelemente 2 an dem Trägerelement 2 angeordnet werden, um die Ausrichtung des Photovoltaikmoduls 4 an den Einfallswinkel der Sonnenstrahlen anzupassen.

Das Montagesystem 1 ist dabei Modular aufgebaut, sodass die übereinander angeordneten Stangenprofile aus Schaumstoff je nach Bedarf auch am Ort der Montage angepasst und miteinander verklebt werden können.

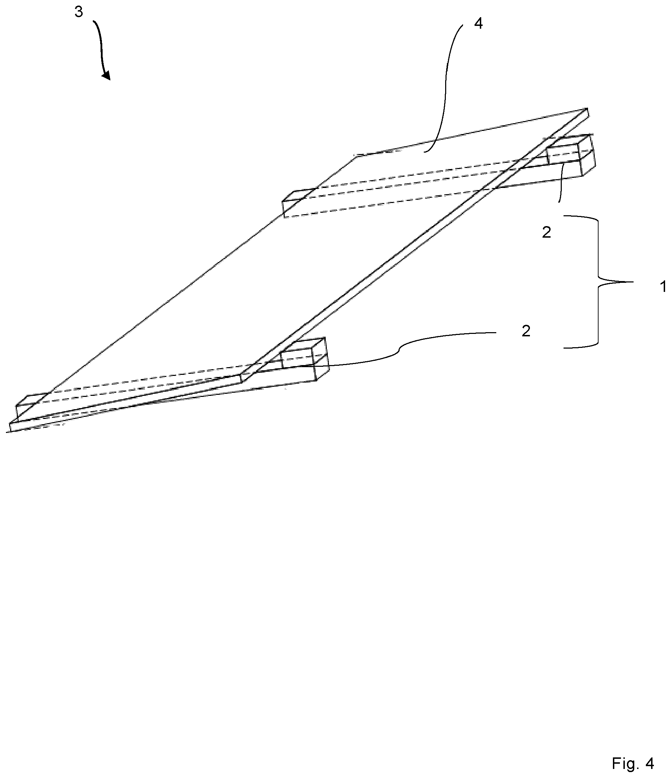

Figur 4 zeigt ein Photovoltaiksystem 3 in einer dritten Ausführungsform. Das Photovoltaiksystem 3 ist dabei ähnlich zu dem Photovoltaiksystem 3 nach Figur 3 aufgebaut. Auch das Photovoltaiksystem 3, bzw. die Trägerelemente 2, nach Figur 4 sind stufenförmig ausgebildet. Im Unterschied zur Ausführungsform nach Figur 3 ist aber nur ein kürzeres Stück Trägerelement 2 auf ein längeres Stück Trägerelement 2 montiert, bzw. geklebt. Dadurch kann ein kleinerer Anstellwinkel des Photovoltaikmoduls 4 realisiert werden.

Aus der Figur 3 und 4 wird deutlich, dass das Photovoltaiksystem 4 modular aufgebaut ist und je nach Anwendungsort angepasst werden kann. Durch den stufenförmigen Aufbau kann zum Beispiel der Winkel in Bezug auf die potentielle Sonneneinstrahlung individuell angepasst werden.

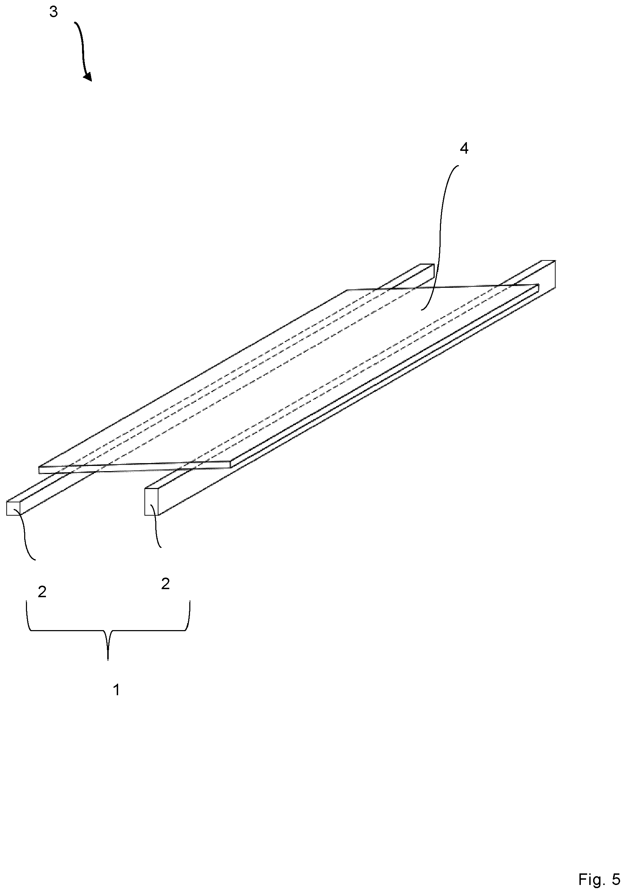

Figur 5 zeigt ein Photovoltaiksystem 3 in einer vierten Ausführungsform. Deutlich wird, dass das Montagesystem 1 wenistens zwei Trägerelemente 2 umfasst, wobei die Trägerelemente 2 eine unterschiedliche Höhe haben. Auf diese Weise kann das Photovoltaikmodul 4 in einem Winkel zur Dachoberfläche ausgerichtet werden, um eine optimale Sonneneinstrahlung zu gewährleisten.

Das ganze Photovoltaiksystem 3 ist entsprechend skalierbar. Das heißt, es ist denkbar, dass mehrere Trägerelemente 2 nebeneinander angeordnet sind, sodass eine Vielzahl von Photovoltaikmodulen 4 nebeneinander und/oder übereinander an den Trägerelementen 2 montiert werden können.

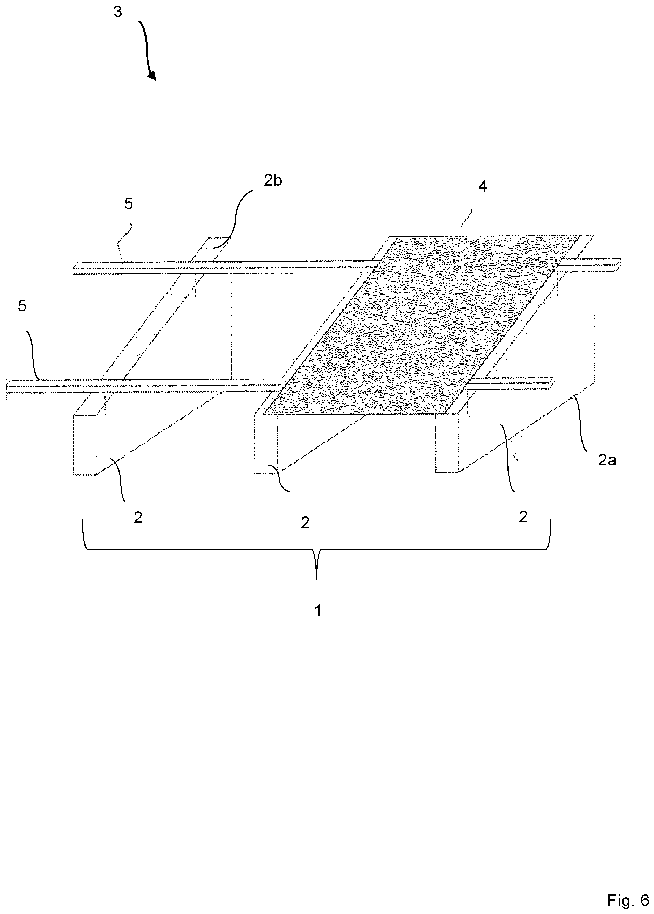

Figur 6 zeigt ein Photovoltaiksystem 3 in einer fünften Ausführungsform. Deutlich wird, dass das Montagesystem 1 eine Vielzahl von nebeneinander angeordneten Trägerelementen 2 hat, wobei auf der Oberseite 2b der Trägerelemente 2 Schienen 5 angeordnet sind. Auf den Schienen 5 können dann Photovoltaikmodule 4 befestigt werden. Dadurch ist das Photovoltaikmodul 4 zumindest mittelbar durch die Schienen 5 an der Oberseite 2b der Trägerelemente befestigt.

Weiterhin deutlich wird, dass die Trägerelemente 2 keilförmig ausgebildet sind. Die Oberfläche 2b der Trägerelemente 2 ist schräg ausgebildet, sodass auch das montierte Photovoltaikmodul schräg in Bezug auf die Unterseite 2a an den Trägerelementen 2 angeordnet sind, um einen möglichst guten Wirkungsgrad durch die einfallende Sonnenstrahlung zu erzielen.

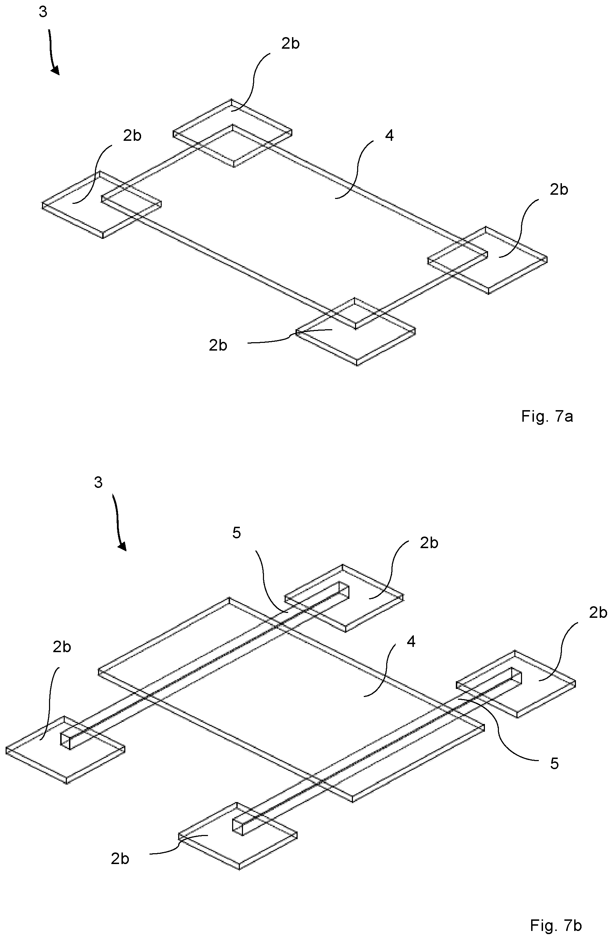

Figur 7a zeigt ein Photovoltaiksystem 3 in einer sechsten Ausführungsform, wobei im Unterschied zu den vorangegangenen Ausführungsformen die Trägerelemente 2 nicht als längliche Stangenprofile ausgebildet sind, sondern vielmehr als scheibenförmige Elemente. Diese Trägerelemente 2 haben im Vergleich zu Ihrer Dicke eine flächenmäßige große Unterseite 2a und Oberseite 2b.

Die Trägerelemente 2 könnten dabei mir Ihrer Unterseite 2a auf eine Dachoberfläche geklebt werden, wobei das Photovoltaikmodul 4 auf die Oberseite 2b der Trägerelemente befestigt werden kann. Dies kann zum Beispiel auch durch kleben oder eine Schraubverbindung erfolgen. In diesem Ausführungsbeispiel ist das Photovoltaikmodul 4 jeweils an einer seiner vier Eckkanten an einem Trägerelement 2 befestigt. Insgesamt sind somit vier Trägerelemente 4 verwendet worden.

Die Figur 7b zeigt das Photovoltaiksystem 3 nach Figur 7a, wobei im Unterschied zur Figur 7a Schienen 5 verwendet wurden, um das Photovoltaikmodul 4 an den Trägerelementen 2 mittelbar zu montieren. Dabei ist jeweils eine Schiene 5 an zwei Trägerelementen 2 montiert. In dem vorliegenden Ausführungsbeispiel sind die Schienen 5 dabei im Wesentlichen parallel zueinander angeordnet.

Aus den Figuren 7a und 7b wird deutlich wird, dass die Trägerelemente 2 eine quadratische Form haben.

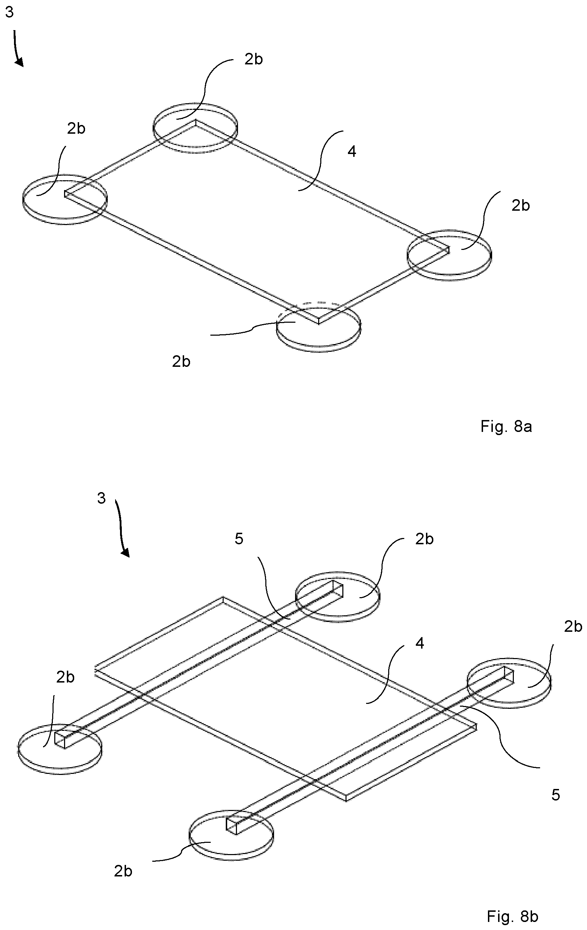

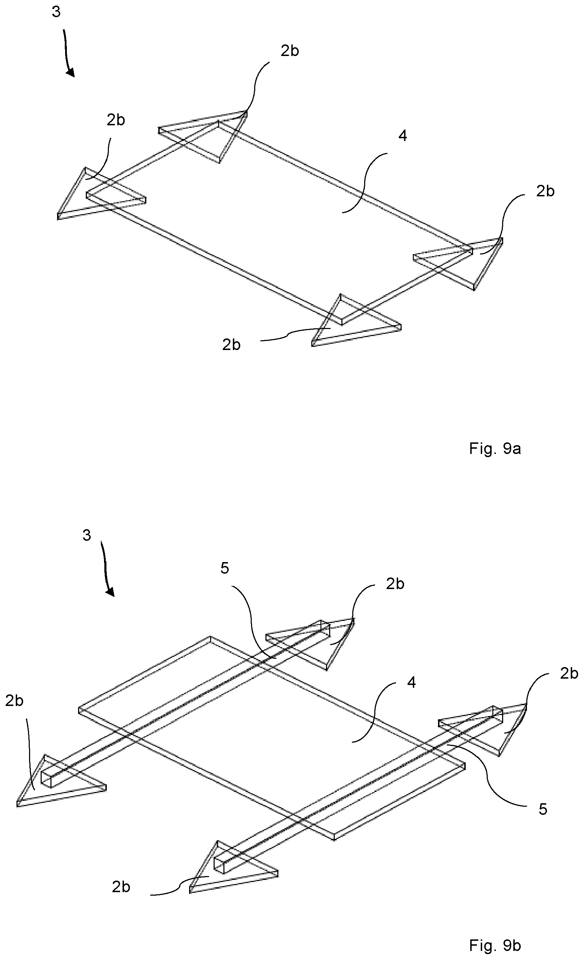

Die Figuren 8a, 8b und 9a, 9b zeigen ein erfindungsgemäßen Photovoltaiksystem 3 ähnlich zu den Figuren 7a und 7b, wobei im Unterschied zu den Figuren 7a und 7b die Trägerelemente 2 eine andere Form haben. In den Figuren 8a und 8b werden Trägerelemente 2 mit einer runden Form gezeigt und den Figuren 9a und 9b werden Trägerelemente 2 mit einer dreieckigen Form gezeigt. Die Art der Geometrie ist dabei nicht abschließend beschrieben. Es sind auch andere geometrische Ausgestaltungen des Trägerelementes 2 denkbar.

### Bezugszeichenliste

- 1: Montagesystem
- 2: Trägerelement
- 2a: Unterseite
- 2b: Oberseite
- 3: Photovoltaiksystem
- 4: Photovoltaikmodul
- 5: Schienen

## Patentansprüche

1. Montagesystem (1) für Photovoltaikanlagen zur Montage auf eine Dachfläche mit einer ebenen Oberfläche, wobei das Montagesystem (1) zumindest ein Trägerelement (2) hat, wobei das Trägerelement (2) eine Unterseite (2a) und eine Oberseite (2b) hat, wobei die Unterseite (2a) an der Dachfläche verklebbar ist und wobei an der Oberfläche unmittelbar oder mittelbar ein Photovoltaikmodul (4) befestigbar ist, **dadurch gekennzeichnet, dass** das Trägerelement (2) zumindest zu einem überwiegenden Teil ein Schaumstoff umfasst.

2. Montagesystem (1) nach Anspruch 1, **dadurch gekennzeichnet, dass** der Schaumstoff ein expandiertes Polystyrol ist.

3. Montagesystem (1) nach Anspruch 2, **dadurch gekennzeichnet, dass** der Schaumstoff ein expandiertes Polystyrolhartschaumstoff ist, wobei dem Schaumstoff ein Additiv zur Verbesserung der Festigkeit zugesetzt ist.

4. Montagesystem (1) nach Anspruch 1, **dadurch gekennzeichnet, dass** der Schaumstoff ein Polyurethan (PUR), insbesondere ein Polyisocyanurat (PIR) umfasst.

5. Montagesystem (1) nach einem der vorhergehenden Ansprüche, **dadurch gekennzeichnet, dass** an der Oberfläche des Trägerelementes (2) wenigstens ein Haltelement angeordnet ist, wobei das Halteelement mit dem Photovoltaikmodul (4) verschraubbar ist.

6. Montagesystem (1) nach einem der vorhergehenden Ansprüche, **dadurch gekennzeichnet, dass** das Montagesystem (1) eine Vielzahl von Trägerelementen (2) hat, wobei das Photovoltaikmodul (4) an wenigstens zwei der Trägerelemente (2) befestigbar ist.

7. Montagesystem (1) nach einem der vorhergehenden Ansprüche, **dadurch gekennzeichnet, dass** an der Oberfläche des Trägerelementes (2) eine Trägerschiene (5) angeordnet ist, wobei das Photovoltaikmodul (4) an der Trägerschiene (5) befestigbar ist.

8. Montagesystem (1) nach einem der vorhergehenden Ansprüche, **dadurch gekennzeichnet, dass** das Trägerelement (2) stufenförmig ausgebildet ist, wobei die Oberfläche des Trägerelementes (2) wenigstens zwei verschiedenartige Höhen in Bezug auf die Unterseite (2a) hat.

9. Photovoltaiksystem für ebene Dachflächen mit einem Montagesystem (1) nach einem der Ansprüche 1 bis 7 und wenigstens einem Photovoltaikmodul (4), wobei das Photovoltaikmodul (4) an der Oberfläche des Trägerelementes (2) befestigt ist.

10. Photovoltaiksystem nach Anspruch 9, **dadurch gekennzeichnet, dass** das Photovoltaikmodul (4) an der Oberfläche des Trägerelementes (2) unmittelbar mit dem Trägerelement (2) verschraubt ist.

11. Verfahren zur Montage eines Photovoltaiksystems (3) nach den Ansprüchen 9 bis 10 mit den folgenden Schritten:
• Kleben des Trägerelementes (2) auf die ebene Oberfläche der Dachfläche
• Kleben oder Verschrauben des Photovoltaikmoduls (4) an der Oberfläche des Trägerelementes (2)

12. Verfahren nach Anspruch 11, **dadurch gekennzeichnet, dass** das Kleben des Montagesystems (1) auf die ebene Oberfläche der Dachfläche mit einem MS-Polymer Klebstoff oder einem Polyurethan-Klebstoff erfolgt.

13. Verfahren nach Anspruch 11 bis 12, **dadurch gekennzeichnet, dass** eine Vielzahl von Trägerelementen (2) mit der ebene Oberfläche der Dachfläche verklebt werden und eine Vielzahl von Photovoltaikmodulen (4) an den Trägerelementen (2) befestigt werden, wobei jeweils ein Photovoltaikmodul (4) an wenigstens zwei Trägerelementen (2) befestigt wird.
